Europäisches Patentamt

European Patent Office

Office européen des brevets

(11) Veröffentlichungsnummer: **0 501 010 A1**

# EUROPÄISCHE PATENTANMELDUNG

(21) Anmeldenummer: **91117098.3**

(22) Anmeldetag: **08.10.91**

(51) Int. Cl.5: **H05B 3/74**, H05B 3/14, C22C 29/00

(30) Priorität: **26.02.91 EP 91102800**

(43) Veröffentlichungstag der Anmeldung: **02.09.92 Patentblatt 92/36**

(84) Benannte Vertragsstaaten:
**AT BE CH DE DK ES FR GB GR IT LI LU NL SE**

(71) Anmelder: **LAPIN-DEMIN GmbH**
**Sechsheldener Strasse 122**
**W-6342 Haiger 2 - Sechshelden(DE)**

(72) Erfinder: **Demin, Oleg, Dr.**
**Svobodniy Pr., 9-1-119**
**Moskau, 111 578(SU)**

(74) Vertreter: **Gesthuysen, Hans Dieter, Dipl.-Ing.**
**et al**
**Patentanwälte Gesthuysen + von Rohr**
**Huyssenallee 15 Postfach 10 13 33**
**W-4300 Essen 1(DE)**

(54) **Flächenheizelement und Verfahren zu seiner Herstellung.**

(57) Dargestellt und beschrieben ist ein Flächenheizelement, insbesondere für thermische Hausgeräte, mit einem flächenhaften Trägerelement (1) und einer flächenhaft auf das Trägerelement (1) aufgebrachten, elektrisch leitfähigen Heizschicht (2), wobei die Heizschicht (2) Glas enthält und in pastösem Zustand aufgetragen ist.

Das erfindungsgemäße Flächenheizelement ermöglicht relativ hohe flächenspezifische Heizleistungen und relativ hohe Heiztemperaturen und ist darüber hinaus relativ billig, und zwar dadurch, daß die Heizschicht (2) im pastösen Zustand aus pulverförmigem Molybdänborid, aus zwei unterschiedlichen pulverförmigen Glasarten und aus einer organischen Substanz besteht, - wobei im Ausführungsbeispiel zwischen dem Trägerelement (1) und der Heizschicht (2) eine Isolierschicht (3) vorgesehen ist und die Heizschicht (2) an der dem Trägerelement (1) abgewandten Seite mit einer Schutzschicht (4) versehen ist.

EP 0 501 010 A1

Die Erfindung betrifft ein Flächenheizelement, insbesondere für thermische Hausgeräte, mit einem flächenhaften Trägerelement und einer flächenhaft auf das Trägerelement aufgebrachten, elektrisch leitfähigen Heizschicht, wobei die Heizschicht Glas enthält und in pastösem Zustand aufgetragen ist, - und ein Verfahren zur Herstellung eines solchen Flächenheizelements.

Flächenheizelemente der in Rede stehenden Art sind vielfach bekannt und vor allem in jüngerer Zeit Gegenstand umfangreicher Entwicklungsarbeiten (vgl. die deutschen Offenlegungsschriften 35 45 267 und 35 45 442, die DDR-Patentschrifte 227 853 und 227 854 sowie die europäischen Offenlegungsschriften 0 222 162, 0 319 079 und 0 381 792). Allen bekannten Flächenheizelementen ist gemeinsam, daß sie nur eine relativ geringe flächenspezifische Heizleistung und nur relativ geringe Heiztemperaturen zulassen, darüber hinaus relativ teuer sind.

Der Erfindung liegt folglich die Aufgabe zugrunde, ein Flächenheizelement der in Rede stehenden Art anzugeben, das relativ hohe flächenspezifische Heizleistungen und relativ hohe Heiztemperaturen ermöglicht und darüber hinaus relativ billig ist.

Das erfindungsgemäße Flächenheizelement, mit dem und bei dem die zuvor aufgezeigte Aufgabe gelöst ist, ist dadurch gekennzeichnet, daß die Heizschicht im pastösen Zustand aus einem der pulverförmigen Molybdänboride, nämlich $Mo_2P_5$, $MoB$, $Mo_2B$, aus zwei unterschiedlichen pulverförmigen Glasarten und vorzugsweise aus einer organischen Substanz besteht.

Grundsätzlich kann bei dem erfindungsgemäßen Flächenheizelement das flächenhafte Trägerelement aus elektrisch nicht-leitfähigem Material bestehen. Dann kann die elektrisch leitfähige Heizschicht direkt auf das Trägerelement aufgebracht werden. In der Regel besteht jedoch das flächenhafte Trägerelement aus elektrisch leitfähigem Material, z. B. aus Edelstahl oder aus Glaskeramik, die zwar bei Raumtemperatur eine geringe elektrische Leitfähigkeit hat, deren elektrische Leitfähigkeit jedoch mit zunehmender Temperatur ansteigt. Besteht bei dem erfindungsgemäßen Flächenheizelement das flächenhafte Trägerelement aus elektrisch leitfähigem Material, insbesondere aus Edelstahl oder aus Glaskeramik, dann ist zwischen dem Trägerelement und der Heizschicht eine Isolierschicht vorzusehen. Schließlich empfiehlt es sich, die Heizschicht an der dem Trägerelement abgewandten Seite mit einer Schutzschicht zu versehen.

Im einzelnen gibt es verschiedene Möglichkeiten, die Lehre der Erfindung auszugestalten und weiterzubilden, was insbesondere in bezug auf die Zusammensetzung der Heizschicht im einzelnen, aber auch in bezug auf die Zusammensetzung der Isolierschicht und der Schutzschicht gilt und im folgenden nur beispielhaft aufgezeigt werden soll.

Zunächst besteht bei dem erfindungsgemäßen Flächenheizelement die Heizschicht vorzugsweise aus 4,0 bis 80,0 % Molybdänborid, 9,0 bis 48,0 % der ersten Glasart, 1,0 bis 23,0 % der zweiten Glasart und 10,0 bis 25,0 % der organischen Substanz. (Die Prozentzahlen beziehen sich hier und im folgenden immer auf Masseanteile, bezogen auf die gesamte Masse.)

Besondere Bedeutung kommt der weiteren Lehre zu, daß die erste Glasart eine 700 °C nicht überschreitende Aufweichtemperatur hat und vorzugsweise aus 23,0 bis 42,0 % Siliciumoxid ($SiO_2$), 1,5 bis 8,0 % Aluminiumoxid ($Al_2O_3$), 13,0 bis 29 % Boroxid ($B_2O_3$), 5,0 bis 16,0 % Wismutoxid ($Bi_2O_3$), 1,5 bis 7,5 % Calciumoxid (CaO), 25,0 bis 43,0 % Bariumoxid (BaO) und 1,0 bis 11,3 % Zinkoxid (ZnO) besteht und/oder daß die zweite Glasart kristallisiert ist, eihe 820 °C nicht überschreitende Anfangskristallisationstemperatur hat und vorzugsweise aus 16,0 bis 25,0 % Siliciumoxid ($SiO_2$), 5,0 bis 25,0 % Boroxid ($B_2O_3$), 3,0 bis 10,0 Calciumoxid (CaO), 15,0 bis 30,0 % Magnesiumoxid (MgO), 10,0 bis 35,0 % Bariumoxid (BaO), 0,5 bis 5,0 % Titanoxid ($TiO_2$), 0,1 bis 3,0 % Manganoxid ($Mn_2O_3$), 0,1 bis 5,0 % Phosphoroxid ($P_2O_5$), 0,1 bis 12,0 % Zirkoniumoxid ($ZrO_2$) und 2,0 bis 6,0 % Aluminiumoxid ($Al_2O_3$) besteht.

Bei dem erfindungsgemäßen Flächenheizelement kann als organische Substanz ein Gemisch aus Lanolin, Vaselinöl und ggf. Zyklohexanol verwendet sein, vorzugsweise aus 15 Teilen Lanolin, 3 Teilen Vaselinöl und einem Teil Zyklohexanol.

Sind bei dem erfindungsgemäßen Flächenheizelement, wie zuvor aufgezeigt, neben der Heizschicht noch eine Isolierschicht und/oder eine Schutzschicht verwirklicht, so können auch die Isolierschicht bzw. die Schutzschicht in verschiedener Weise realisiert sein. Hinsichtlich der Isolierschicht geht eine weitere Lehre der Erfindung dahin, daß diese in pastösem Zustand aus der pulverförmigen zweiten Glasart und aus einer organischen Substanz besteht, vorzugsweise aus 70,0 bis 90,0 % der zweiten Glasart und 10,0 bis 30,0 % der organischen Substanz, die organische Substanz vorzugsweise aus 25,0 bis 60,0 % Lanolin und 40,0 bis 75,0 % Vaselinöl. Die Schutzschicht besteht vorzugsweise in pastösem Zustand aus den beiden pulverförmigen Glasarten und aus der organischen Substanz, die auch Bestandteil der Heizschicht ist, vorzugsweise aus 10,0 bis 89,0 % der ersten Glasart, 1,0 bis 60,0 % der zweiten Glasart und 10,0 bis 30,0 % der organischen Substanz.

Gegenstand der Erfindung ist auch, wie eingangs ausgeführt, ein Verfahren zur Herstellung eines Flächenheizelements mit einem flächenhaften Trägerelement und einer flächenhaft auf das Trägerelement aufgebrachten, elektrisch leitfähigen Heizschicht, wobei die Heizschicht Glas enthält und in pastösem Zustand aufgetragen ist, insbesondere ein Verfahren zur Herstellung des zuvor beschriebenen erfindungsgemäßen Flächenheizelements. Dabei ist das erfindungsgemäße Verfahren zunächst und im wesentlichen dadurch gekennzeichnet, daß ggf. die Isolierschicht, die Heizschicht und ggf. die Schutzschicht im pastösen Zustand im Siebdruckverfahren aufgebracht wird bzw. werden. Danach wird bzw. werden dann ggf. die Isolierschicht, die Heizschicht und ggf. die Schutzschicht eingebrannt, und zwar bei einer Temperatur von ca. 820 bis 875 °C, vorzugsweise von ca. 850 °C. Im einzelnen empfiehlt es sich, zuerst eine erste Teilschicht der Isolierschicht aufzubringen und einzubrennen, danach eine zweite, eine dritte und ggf. eine vierte Teilschicht der Isolierschicht aufzubringen und einzubrennen, danach die Heizschicht aufzubringen und einzubrennen und schließlich die Schutzschicht aufzubringen und einzubrennen.

Molybdänborid ist bei dem erfindungsgemäßen Flächenheizelement das Material, das der Heizschicht die elektrische Leitfähigkeit gibt. Dadurch, daß die erste Glasart ab 700 °C aufzuweichen beginnt, wird das Molybdänborid vor einer unerwünschten Luftzufuhr geschützt. Damit nun die erste Glasart bei steigenden Temperaturen nicht völlig schmilzt, wird durch die zweite Glasart gleichsam ein Schutzgerüst aufgebaut.

Die Verwendung der zweiten Glasart für die Isolierschicht und die Verwendung der ersten und der zweiten Glasart für die Schutzschicht ist deshalb vorteilhaft, weil diese Glasarten hinsichtlich der relevanten Eigenschaften, insbesondere des thermischen Ausdehnungskoeffizienten und der chemischen Trägheit, besonders auf Molybdänborid abgestimmt sind.

Im folgenden wird nun ein Ausführungsbeispiel der Erfindung, auch anhand einer Zeichnung, näher erläutert.

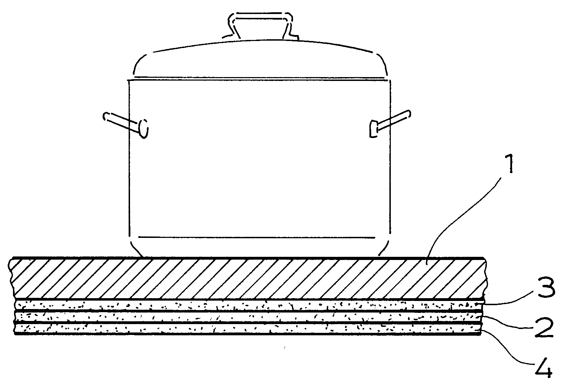

Die einzige Figur der Zeichnung zeigt ein Flächenheizelement, nämlich für thermische Hausgeräte, im dargestellten Ausbildungsbeispiel für einen Elektroherd, mit einem flächenhaften Trägerelement 1, beispielsweise aus Edelstahl oder aus Glaskeramik, und einer flächenhaft auf das Trägerelement 1 aufgebrachten, elektrisch leitfähigen Heizschicht 2, wobei die Heizschicht 2 Glas enthält und in pastösem Zustand aufgetragen ist.

Erfindungsgemäß besteht die Heizschicht 2 im pastösen Zustand aus pulverförmigem Molybdänborid, aus zwei unterschiedlichen pulverförmigen Glasarten und aus einer organischen Substanz. Im dargestellten Ausführungsbeispiel ist zwischen dem Trägerelement 1 und der Heizschicht 2 eine Isolierschicht 3 vorgesehen und ist die Heizschicht 2 an der dem Trägerlement 1 - bzw. der Isolierschicht 3 - abgewandten Seite mit einer Schutzschicht 4 versehen.

Bei einem besonders bevorzugten Ausführungsbeispiel besteht die Heizschicht 2 aus 30,0 % Molybdänborid, 35,0 % der ersten Glasart, 15,0 % der zweiten Glasart und 20,0 % der organischen Substanz. Die erste Glasart besteht aus 28,5 % Siliciumoxid, 2,0 % Aluminiumoxid, 16,0 % Boroxid, 10,0 % Wismutoxid, 4,0 % Calciumoxid, 34,0 % Bariumoxid und 5,5 % Zinkoxid. Die zweite Glasart ist zusammengesetzt aus 23,0 % Siliciumoxid, 9,0 % Boroxid, 9,0 % Calciumoxid, 29,0 % Magnesiumoxid, 19,0 % Bariumoxid, 4,0 % Titanoxid, 2,5 % Manganoxid, 0,5 % Phosphoroxid und 4,0 % Zirkoniumoxid. Für die organische Substanz gilt, daß diese aus 15 Teilen Lanolin, 3 Teilen Vaselinöl und einem Teil Zyklohexanol besteht.

Die Herstellung des erfindungsgemäßen Flächenheizelements geschieht in folgenden Schritten: Zunächst wird die erste Glasart - mit den zuvor im einzelnen angegebenen Bestandteilen - bei einer Temperatur von 1.300 °C in einem Platin-Tiegel "gekocht". Danach erfolgt ein Verarbeiten zu Granulat, dann eine Zerkleinerung bis zu einer spezifischen Oberfläche von 7.000 cm². Als nächstes wird die zweite Glasart - mit den zuvor im einzelnen angegebenen Bestandteilen - bei einer Temperatur von 1.400 °C in einem Korund-Tiegel "gekocht". Danach erfolgt das Verarbeiten zu Granulat, dann das Zerkleinern bis zu einer spezifischen Oberfläche von 6.000 cm². Das Zerkleinern erfolgt in mehreren Schritten, wobei der wichtigste Schritt das Zerkleinern in einer Planetar-Kugelmühle ist.

Im nächsten Schritt werden das Molybdänborid, die erste Glasart, die zweite Glasart und die organische Substanz mit Hilfe einer Pastenreibe solange gemischt, bis eine homogene Paste vorliegt.

Für die Isolierschicht 3 wird eine Mischung aus 80,0 % der zweiten Glasart und 20,0 % der organischen Substanz verwendet, wobei die organische Substanz aus 40,0 % Lanolin und 60,0 % Vaselinöl besteht.

Schließlich wird für die Schutzschicht 4 eine Mischung aus 60,0 % der ersten Glasart, 20,0 % der zweiten Glasart und 20,0 % der organischen Substanz verwendet, wobei die organische Substanz, wie bei der Heizschicht 2, aus 15 Teilen Lanolin, 3 Teilen Vaselinöl und einem Teil Zyklohexanol besteht.

Nachdem die Pasten für die Heizschicht 2, die Isolierschicht 3 und die Schutzschicht 4 fertig sind, wird mit dem Auftragen auf das Trägerelement 1 und dem Einbrennen begonnen. Zunächst wird eine erste Teilschicht der Isolierschicht 3 im Siebdruckverfahren auf das Trägerelement 1 aufgebracht und bei einer Temperatur von 850 °C eingebrannt. Dieser Vorgang wird drei- bis viermal wiederholt. Danach wird die Heizschicht 2 auf die zuvor hergestellte Isolierschicht 3 aufgebracht, und zwar wiederum im Siebdruckverfahren. Auch die Heizschicht 2 wird bei einer Temperatur von 850 °C eingebrannt. Schließlich wird die Schutzschicht 4 auf die Heizschicht 2 aufgebracht, wiederum im Siebdruckverfahren, und anschließend eingebrannt. Das Aufbringen und Einbrennen der Schutzschicht 4 erfolgt, wie das Aufbringen und Einbrennen der Isolierschicht 3, mit Teilschichten, vorzugsweise mit zwei bis drei Teilschichten.

Das erfindungsgemäße Flächenheizelement erlaubt eine flächenspezifische Heizleistung von bis zu 13 W/cm$^2$ und eine Heiztemperatur von 800 °C. Diese hervorragenden Eigenschaften sind erreicht, ohne daß Edelmetalle verwendet worden sind, so daß das erfindungsgemäße Flächenheizelement relativ billig ist.

**Patentansprüche**

1. Flächenheizelement, insbesondere für thermische Hausgeräte, mit einem flächenhaften Trägerelement und einer flächenhaft auf das Trägerelement aufgebrachten, elektrisch leitfähigen Heizschicht, wobei die Heizschicht Glas enthält und in pastösem Zustand aufgetragen ist, **dadurch gekennzeichnet,** daß die Heizschicht (2) im pastösen Zustand aus einem der pulverförmigen Molybdänboride, nämlich $Mo_2P_5$, MoB, $Mo_2B$, aus zwei unterschiedlichen pulverförmigen Glasarten und vorzugsweise aus einer organischen Substanz besteht.

2. Flächenheizelement nach Anspruch 1, dadurch gekennzeichnet, daß zwischen dem Trägerelement (1) und der Heizschicht (2) eine Isolierschicht (3) vorgesehen ist.

3. Flächenheizelement nach Anspruch 1 oder 2, dadurch gekennzeichnet, daß die Heizschicht (2) an der dem Trägerelement (1) abgewandten Seite mit einer Schutzschicht (4) versehen ist.

4. Flächenheizelement nach einem der Ansprüche 1 bis 3, dadurch gekennzeichnet, daß die Heizschicht aus 4,0 bis 80,0 % Molybdänborid, 9,0 bis 48,0 % der ersten Glasart, 1,0 bis 23,0 % der zweiten Glasart und 10,0 bis 25,0 % der organischen Substanz besteht.

5. Flächenheizelement nach einem der Ansprüche 1 bis 4, dadurch gekennzeichnet, daß die erste Glasart eine 700 °C nicht überschreitende Aufweichtemperatur hat und vorzugsweise aus 23,0 bis 42,0 % Siliciumoxid, 1,5 bis 8,0 % Aluminiumoxid, 13,0 bis 29,0 % Boroxid, 5.0 bis 16.0 % Wismutoxid, 1,5 bis 7,5 % Calciumoxid, 25,0 bis 43,0 % Bariumoxid und 1,0 bis 11,3 % Zinkoxid besteht.

6. Flächenheizelement nach einem der Ansprüche 1 bis 5, dadurch gekennzeichnet, daß die zweite Glasart kristallisiert ist, eine 820 °C nicht überschreitende Anfangskristallisationstemperatur hat und vorzugsweise aus 16,0 bis 25,0 % Siliciumoxid, 5,0 bis 25,0 % Boroxid, 3,0 bis 10,0 % Calciumoxid, 15,0 bis 30,0 % Magnesiumoxid, 10,0 bis 35,0 % Bariumoxid, 0,5 bis 5,0 % Titanoxid, 0,1 bis 3,0 % Manganoxid, 0,1 bis 5,0 % Phosphoroxid, 0,1 bis 12,0 % Zirkoniumoxid und 2,0 bis 6,0 % Aluminiumoxid besteht.

7. Flächenheizelement nach einem der Ansprüche 1 bis 6, dadurch gekennzeichnet, daß als organische Substanz ein Gemisch aus Lanolin, Vaselinöl und ggf. Zyklohexanol verwendet ist.

8. Flächenheizelement nach einem der Ansprüche 2 bis 7, dadurch gekennzeichnet, daß die Isolierschicht (3) in pastösem Zustand aus der pulverförmigen zweiten Glasart und aus einer organischen Substanz besteht, vorzugsweise aus 70,0 bis 90,0 % der zweiten Glasart und 10,0 bis 30,0 % der organischen Substanz, die organische Substanz vorzugsweise aus 25,0 bis 60,0 % Lanolin und 40,0 bis 75,0 % Vaselinöl.

9. Flächenheizelement nach einem der Ansprüche 3 bis 8, dadurch gekennzeichnet, daß die Schutzschicht (4) in pastösem Zustand aus den beiden pulverförmigen Glasarten und aus einer organischen Substanz besteht, vorzugsweise aus 10,0 bis 89,0 % der ersten Glasart, 1,0 bis 60,0 % der zweiten Glasart und 10,0 bis 30,0 % der organischen Substanz, die organische Substanz vorzugsweise aus 15 Teilen Lanolin, 3 Teilen Vaselinöl und einem Teil Zyklohexanol.

10. Verfahren zur Herstellung eines Flächenheizelements mit einem flächenhaften Trägerelement und einer flächenhaft auf das Trägerelement aufgebrachten, elektrisch leitfähigen Heizschicht, wobei die Heizschicht Glas enthält und in pastösem Zustand aufgetragen ist, insbesondere zur Herstellung eines Flächenheizelements nach einem der Ansprüche 1 bis 9, **dadurch gekennzeichnet,** daß ggf. die Isolierschicht, die Heizschicht und ggf. die Schutzschicht im pastösen Zustand im Siebdruckverfahren aufgebracht wird bzw. werden.

11. Verfahren nach Anspruch 10, dadurch gekennzeichnet, daß ggf. die Isolierschicht, die Heizschicht und ggf. die Schutzschicht bei einer Temperatur von 820 bis 875 °C, vorzugsweise von ca. 850 °C eingebrannt wird bzw. werden.

12. Verfahren nach Anspruch 10 und 11, dadurch gekennzeichnet, daß eine erste Teilschicht der Isolierschicht aufgebracht und eingebrannt wird, daß danach eine zweite, eine dritte und ggf. eine vierte Teilschicht der Isolierschicht aufgebracht und eingebrannt wird, daß danach die Heizschicht aufgebracht und eingebrannt wird und daß schließlich die Schutzschicht aufgebracht und eingebrannt wird, vorzugsweise in Form von zwei oder drei Teilschichten aufgebracht und eingebrannt wird.

Europäisches
Patentamt

**EUROPÄISCHER RECHERCHENBERICHT**

Nummer der Anmeldung

EP    91 11 7098
Seite 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | CHEMICAL ABSTRACTS, vol. 107, no. 12, 21. September 1987, Columbus, Ohio, US; abstract no. 107544K, TOSHIMITSU HONDA ET AL.: 'Resistor paste' Seite 728 ; * Zusammenfassung * | 1-3,10 | H05B3/74 H05B3/14 C22C29/00 |
| A | --- | 4-7 | |
| Y | PATENT ABSTRACTS OF JAPAN vol. 14, no. 511 (E-999)8. November 1990 & JP-A-2 211 602 ( SUMITOMO METAL MINING CO. ) 22. August 1990 * Zusammenfassung * | 1,10 | |
| A | --- | 11 | |
| Y | EP-A-0 286 216 (THORN EMI PLC) * Spalte 2, Zeile 55 - Spalte 5, Zeile 19; Abbildungen 1-3 * | 1-3 | |
| A | --- | 10-12 | |
| A | EP-A-0 286 215 (THORN EMI PLC) * Spalte 2, Zeile 48 - Spalte 4, Zeile 39; Abbildung 2 * | 1-12 | RECHERCHIERTE SACHGEBIETE (Int. Cl.5) |
| A | --- EP-A-0 300 685 (THORN EMI PLC) --- | | H05B |
| A | EP-A-0 048 063 (LABORATOIRES D'ELECTRONIQUE ET DE PHYSIQUE APPLIQUEES; N.V. PHILIPS) --- | | |
| A | PATENT ABSTRACTS OF JAPAN vol. 15, no. 14 (E-1022)11. Januar 1991 & JP-A-2 265 211 ( SUMITOMO METAL MINING CO. ) 30. Oktober 1990 * Zusammenfassung * --- | | |

-/--

Der vorliegende Recherchenbericht wurde für alle Patentansprüche erstellt

| Recherchenort | Abschlußdatum der Recherche | Prüfer |
|---|---|---|
| DEN HAAG | 17 JUNI 1992 | ALBERTSSON E.G. |

Europäisches
Patentamt

**EUROPÄISCHER RECHERCHENBERICHT**

Nummer der Anmeldung

EP    91 11 7098
Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | CHEMICAL ABSTRACTS, vol. 107, no. 14, 5. Oktober 1987, Columbus, Ohio, US; abstract no. 125394R, TOSHIMITSU HONDA ET AL.: 'Resistor material' Seite 651 ; * Zusammenfassung * ----- | | |
| | | | **RECHERCHIERTE SACHGEBIETE (Int. Cl.5)** |

Der vorliegende Recherchenbericht wurde für alle Patentansprüche erstellt

| Recherchenort | Abschlußdatum der Recherche | Prüfer |
|---|---|---|
| DEN HAAG | 17 JUNI 1992 | ALBERTSSON E.G. |